# EUROPEAN PATENT APPLICATION

(11) **EP 2 597 568 A1**
(43) Date of publication of application: **29.05.2013**
(21) Application number: 11848446.8
(22) Date of filing: 16.12.2011
(51) Int. Cl.: G06F 9/44

(54) **METHOD AND DEVICE FOR IMPROVING PERFORMANCE OF MOBILE WIDGET**

(30) Priority: 16.12.2010 CN 201010606935; 16.12.2010 CN 201110409640
(71) Applicant: Huawei Technologies Co., Ltd., Shenzhen, Guangdong 518129 (CN)
(72) Inventor: RONG, Yaxin, Shenzhen, Guangdong 518129 (CN); LI, Chaohui, Shenzhen, Guangdong 518129 (CN); SUN, Shi, Shenzhen, Guangdong 518129 (CN)
(74) Representative: Pfenning, Meinig & Partner GbR
(86) International application number: PCT/CN2011/084103
(87) International publication number: WO 2012/079531

(57) **Abstract**

Embodiments of the present invention provide a method and an apparatus for improving performance of a mobile widget application. The method includes: before uploading the developed mobile widget application to a download server, compiling a JavaScript file in the mobile widget application; and then repacking the compiled JavaScript file according to a format accessible by a JavaScript virtual machine on a terminal, and uploading the repacked mobile widget application to the download server for download by the terminal. With the implementation of the preceding method, the JavaScript compilation is not required during the startup of a mobile widget, and the startup of the mobile widget is accelerated, thereby improving the performance of the mobile widget application and enhancing the user experience.

## Description

This application claims priority to Chinese Patent Application No. 201010606935.6, filed with the Chinese Patent Office on December 16, 2010 and entitled "METHOD AND APPARATUS FOR IMPROVING PERFORMANCE OF MOBILE WIDGET APPLICATION", and priority to Chinese Patent Application No. 201110409640.4, filed with the Chinese Patent Office on December 16, 2010 and entitled "METHOD AND APPARATUS FOR IMPROVING PERFORMANCE OF MOBILE WIDGET APPLICATION", which are incorporated herein by reference in their entireties.

### FIELD OF THE INVENTION

The present invention relates to the field of network communications, and in particular to a method and an apparatus for improving performance of a mobile widget application.

### BACKGROUND OF THE INVENTION

Currently, the Widget technology is an application platform based on the Java scripting language JavaScript. A Widget is developed using standard Web technologies such as HyperText Mark-up Language (HTML, HyperText Mark-up Language), cascading style sheets (CSS, Cascading Style Sheets), and JavaScript. A mobile widget is a small application running on a mobile terminal. It follows the basic framework system of a desktop Widget. First, the developers develop the mobile widget on an offline or online simulator, and ensure that it passes the compilation debugging. Then, the developers upload the debugged mobile widget to a server; the server verifies the uploaded mobile widget; after passing the verification, the mobile widget waits to be audited by an administrator. After passing the audit, the installation package of the mobile widget is uploaded to a download server. After that, a mobile terminal user can log in to a specified website or subscribe to the widget on a terminal where the widget engine is installed, and then download mobile widget applications.

Mobile widget applications are programmed in the JavaScript language. Therefore, a JavaScript engine is the basis for a widget engine. A powerful and efficient JavaScript engine is important to the widget technology. According to the widget specifications, the widget downloaded from the download server is a compressed package that contains a configuration information file config.xml, an index.html serving as an entry; a CSS file, JavaScript source code files, an image file, which are referenced by the index.html; and other proprietary resource files related to the widget applications. When starting a widget, the widget engine needs to access and parse the index.html, and recursively parse all of JavaScript files, CSS files and other related files referenced by the index.html. Widget applications are programmed in the JavaScript language; therefore, in normal cases, when the mobile widget is being started, a major task is to parse the JavaScript scripts. If the parsing of JavaScript is accelerated, the widget startup performance will be significantly improved.

In the existing technical solutions, when parsing the JavaScript scripts, most JS engines (JavaScript engines) first compile them and then execute them. During this process, a compiler accesses and scans JavaScript source codes, performs lexical analysis and syntax analysis on them, and then generate instructions that can be executed by a JavaScript virtual machine. When the compiler compiles JavaScript source codes, lexical analysis, syntax analysis, and instruction generation are major consumers of CPU resources. Because of the limited performance of a mobile terminal, when a mobile widget is being started, it usually takes much time to compile the JavaScript, thereby significantly slowing down the startup of the mobile widget and degrading the performance of the mobile widget applications and the user experience.

### SUMMARY OF THE INVENTION

Embodiments of the present invention provide a method and an apparatus for improving performance of a mobile widget application. With this method, the JavaScript compilation is not required during the startup of a mobile widget, and the startup of the mobile widget application is accelerated, thereby improving the performance of the mobile widget application and enhancing the user experience.

An embodiment of the present invention provides a method for improving performance of a mobile widget application. The method includes:
before uploading a developed mobile widget application to a download server, compiling JavaScript files in the mobile widget application; and
repacking the compiled JavaScript files according to a format accessible by a JavaScript virtual machine on a terminal, and uploading the repacked mobile widget application to the download server for download by the terminal.

An embodiment of the present invention further provides an apparatus for improving performance of a mobile widget application. The apparatus includes:
a script compilation module, configured to: before a developed mobile widget application is uploaded to a download server, compile JavaScript files in the mobile widget application;
a packing module, configured to repack the compiled JavaScript files according to a format accessible by a JavaScript virtual machine on a terminal; and
an application uploading module, configured to upload the repacked mobile widget application to the download server for download by the terminal.

An embodiment of the present invention further provides a method for executing a mobile widget application on a terminal. The method includes:
downloading, by a terminal, JavaScript files from a download server, where the JavaScript files are compiled and serialized binary files; and
executing, by the terminal, the binary files when the terminal determines that the JavaScript files are compiled and serialized binary files.

An embodiment of the present further provides a terminal that can execute a mobile widget application. The terminal includes:
a script download module, configured to download JavaScript files from a download server, where the JavaScript files are compiled and serialized binary files; and
a JavaScript engine, configured to execute the binary files after determining that the JavaScript files are compiled and serialized binary files.

Based on the preceding technical solutions, before a developed mobile widget application is uploaded to a download server, the JavaScript files in the mobile widget application are compiled; and the compiled JavaScript files are repacked according to a format accessible by a JavaScript virtual machine on a terminal, and the repacked mobile widget application is uploaded to the download server for download by the terminal. With the implementation of the preceding method, the JavaScript compilation is not required during the startup of a mobile widget, and the startup of the mobile widget application is accelerated, thereby improving the performance of the mobile widget application and enhancing the user experience.

### BRIEF DESCRIPTION OF THE DRAWINGS

FIG. 1 is a schematic flow chart of a method for improving performance of a mobile widget application according to an embodiment of the present invention;

FIG. 2 is a processing flow chart for exemplary compilation by a Widget server according to an embodiment of the present invention;

FIG. 3 is a processing flow chart for exemplary sorting and compilation by a Widget server according to an embodiment of the present invention;

FIG. 4 is a schematic structural diagram of an exemplary directory for a data package of a mobile widget application according to an embodiment of the present invention;

FIG. 5 is a schematic diagram of the content of exemplary JavaScript source files before compilation according to an embodiment of the present invention;

FIG. 6 is a schematic diagram of the content of exemplary compiled and serialized JavaScript files according to an embodiment of the present invention;

FIG. 7 is a schematic structural diagram of an apparatus for improving performance of a mobile widget application according to an embodiment of the present invention;

FIG. 8 is another schematic structural diagram of an apparatus according to an embodiment of the present invention;

FIG. 9 is another schematic structural diagram of an apparatus according to an embodiment of the present invention;

FIG. 10 is another schematic structural diagram of an apparatus according to an embodiment of the present invention; and

FIG. 11 is a schematic structural diagram of a terminal according to an embodiment of the present invention.

### DETAILED DESCRIPTION OF THE EMBODIMENTS

Embodiments of the present invention provide a method and an apparatus for improving performance of a mobile widget application. After an overall analysis of the mobile widget, the links that can be improved are detected. Specifically, before a developed mobile widget application is uploaded to a download server, the JavaScript in the mobile widget application are compiled; and then the compiled JavaScript are repacked according to a format accessible by a JavaScript virtual machine on a terminal, and the repacked mobile widget application is uploaded to the download server for download by the terminal. In this way, the JavaScript compilation is not required during the startup of a mobile widget, and the startup of the mobile widget application is accelerated, thereby improving the performance of the mobile widget application and enhancing the user experience.

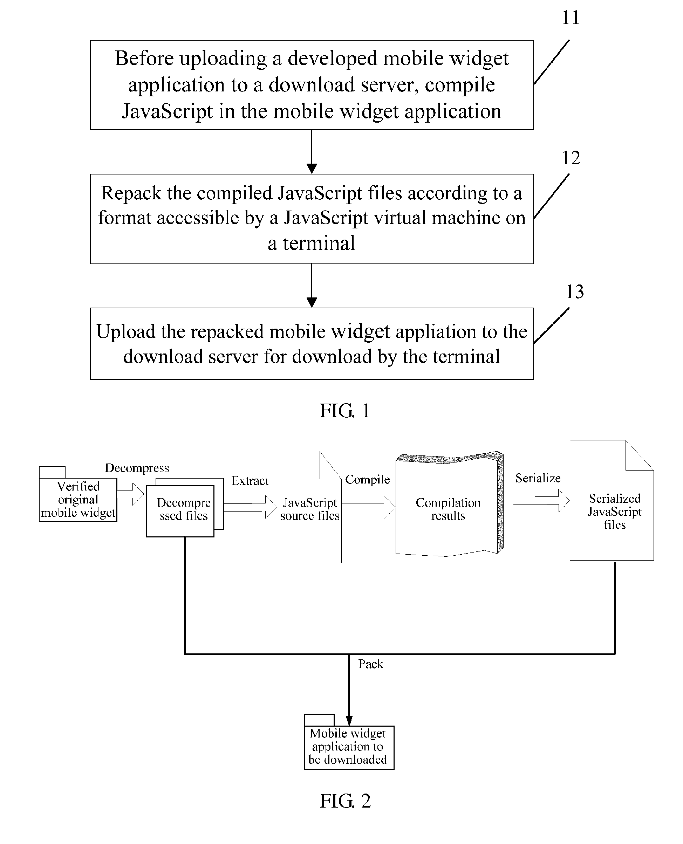

To better describe the embodiments of the present invention, the following illustrates the embodiments of the present invention with reference to the accompanying drawings. FIG. 1 is a schematic flow chart of a method according to an embodiment of the present invention. The method includes:

Step 11: Before uploading a developed mobile widget application to a download server, compile JavaScript in the mobile widget application.

In this step, before the developed mobile widget application is uploaded to a download server, the JavaScript in the mobile widget application may be complied by a Widget server or a client of the development personnel. Specifically:

If the JavaScript in the mobile widget application are complied by a Widget server, after the developed mobile widget application is uploaded to the Widget server, the Widget server compiles the JavaScript in the mobile widget application.

FIG. 2 is a processing flow chart for exemplary compilation by a Widget server according to an embodiment of the present invention. In FIG. 2:

After receiving the mobile widget application completed by a development personnel, the Widget server first verifies the uploaded mobile widget application; after the verification is passed, the Widget server decompresses the verified original widget package, and extracts the JavaScript source code files from the decompressed files; the Widget server compiles and serializes the JavaScript source code files to obtain the serialized JavaScript files; then the Widget server replaces the JavaScript source code files with the serialized JavaScript files, and repacks the serialized JavaScript files into the Widget package to be downloaded according to a format accessible by a JavaScript virtual machine on a terminal. In this way, after the terminal downloads the processed mobile widget application from the download server, the terminal is not required to perform the JavaScript compilation, and the startup of the mobile widget application is accelerated, thereby improving the performance of the mobile widget application and enhancing the user experience.

In addition, before compiling the JavaScript files in the mobile widget application, the Widget server may further sort the received mobile widget applications, that is, different mobile widget applications are sorted to different types being able to run on different types of terminals. In this way, when downloading mobile widget applications, different types of terminals may obtain only the mobile widget applications that can run on them.

During a specific implementation, when sorting the mobile widget applications, the Widget server may identify the types of the mobile widget applications and the terminal types they support, and may compile the sorted mobile widget applications based on the terminal types. In this case, for a type of terminals that cannot run a compiled JavaScript file, the Widget server may not compile the mobile widget application for them. For a type of terminals that can run the compiled JavaScript files, the Widget server may compile the mobile widget application for them. This ensures that the terminals can always run the sorted mobile widget applications, and improves the startup performance of the terminals that can process the compiled JavaScript file.

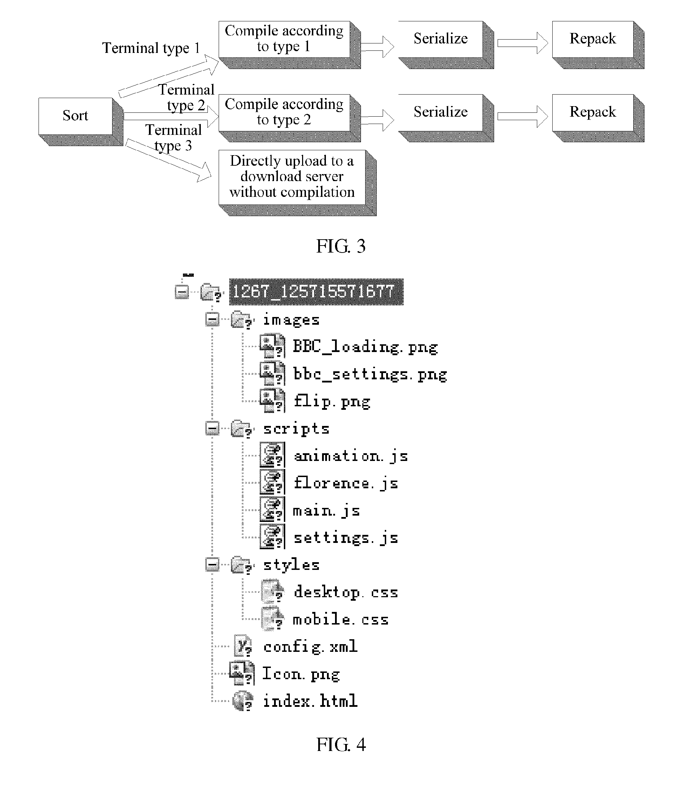

Take FIG. 3 as an example, which is a processing flow chart for exemplary sorting and compilation by a Widget server according to an embodiment of the present invention. In FIG. 3, the Widget server first sorts the received mobile widget applications, that is, different mobile widget applications are sorted to different types being able to run on different types of terminals; in FIG. 3, the mobile widget applications are sorted into three types. Then, the Widget server compiles, serializes, and repacks the mobile widget applications based on the terminal types, wherein the mobile widget applications sorted into terminal type 3 do not need to be compiled, and such mobile widget applications can be directly uploaded to the download server, thereby reducing the compilation workload of the Widget server.

In the preceding solutions, the Widget server compiles the JavaScript files in a mobile widget application. In practice, when it is known exactly the type of terminals that can run the developed mobile widget application, before the developed mobile widget application is uploaded to the Widget server, the JavaScript files in the mobile widget application may also be complied by a client of a development personnel. In this way, the JavaScript files are already compiled before the data package of the mobile widget application is uploaded to the Widget server, and the startup of the mobile widget application is accelerated, thereby improving the performance of the mobile widget application and enhancing the user experience.

During specific implementation, FIG. 4 is a schematic structural diagram of an exemplary directory for a data package of a mobile widget application according to an embodiment of the present invention. In FIG. 4, the data package of the mobile widget application generally contains an entry file index.html, a configuration file config.xml, a widget application icon icon.png; and a CSS file, JavaScript files, which are referenced by the index.html, and so on. The specific procedure for compiling the JavaScript files in the mobile widget application can be as follows:

First, JavaScript source files in the mobile widget application are extracted and then compiled one by one, and the compilation results are saved as binary files with their original names; after all the JavaScript source files are compiled, the original JavaScript source files are replaced with the compiled and serialized binary files.

Step 12: Repack the compiled JavaScript files according to a format accessible by a JavaScript virtual machine on a terminal.

In this step, after the JavaScript files in the mobile widget application are compiled in Step 11, the compiled JavaScript files may be repacked according to a format accessible by a JavaScript virtual machine on a terminal.

Specifically, the original JavaScript source code files are replaced with the compiled and serialized JavaScript files, and then the compiled and serialized JavaScript files are repacked into the data package of the mobile widget application to be downloaded according to a format accessible by a JavaScript virtual machine on a terminal. Because the size of the compiled and serialized JavaScript files are about half of the size of the original JavaScript source code files, the size of the whole data package of the mobile widget application is reduced accordingly. As a result, the terminal consumes less bandwidth when downloading the data package of the mobile widget application, thereby accelerating the download.

Step 13: Upload the repacked mobile widget application to the download server for download by the terminal.

In this step, after being repacked in Step 12, the mobile widget application may be uploaded to the download server for download by the terminal. In this way, after the terminal downloads the processed mobile widget application from the download server, the terminal is not required to perform the JavaScript compilation, and the startup of the mobile widget application is accelerated, thereby improving the performance of the mobile widget application and enhancing the user experience.

In addition, because the size of the data package of the mobile widget application is reduced, the decompressing and installation of the installation package are accelerated; because the JavaScript source files are converted to compiled and serialized JavaScript files of smaller size, the accessing of the files is accelerated, thereby further accelerating the startup.

During a specific implementation, when the JavaScript files in a mobile widget application are compiled in step 11, an identification character can be placed at the beginning of the compiled and serialized binary files. For example, a magic number 0x4A534621 can be set, which is the ASCII code of the character string "JSF!". With such a identification character, when accessing JavaScript files in the downloaded mobile widget application, a JavaScript engine on a terminal can determine whether the JavaScript files are JavaScript source files or compiled and serialized binary files and then use appropriate parsing methods.

Further, a version number of a compiler used for compiling the JavaScript source files can be placed behind the identification character. In this way, the JavaScript engine on the terminal can determine whether the serialized binary files are compatible with the JavaScript engine on the terminal based on the version number of the compiler. If the current version of the JavaScript engine on the terminal is incompatible with the version number identified in the serialized JavaScript files, the JavaScript engine on the terminal may refuse to execute the mobile widget application, and further inform the user of the version incompatibility, or request the user to upgrade the client of the JavaScript engine.

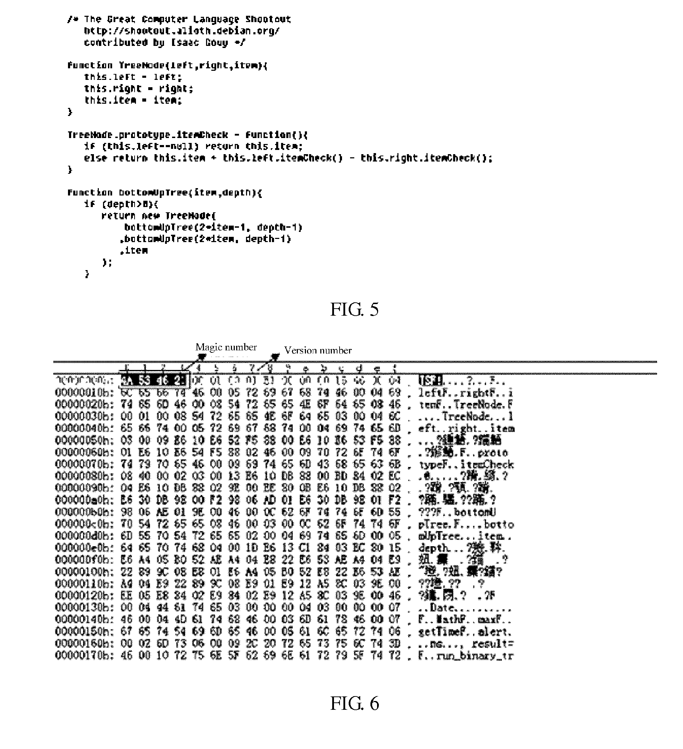

FIG. 5 is a schematic diagram of the content of exemplary JavaScript source files before compilation according to an embodiment of the present invention. FIG. 6 is a schematic diagram of the content of exemplary compiled and serialized JavaScript files according to an embodiment of the present invention. In FIG. 6, the first two parts of the first row are respectively an identification character (a magic number) and a version number, and binary data of the compilation results follows the version number.

With the implementation of the solutions of the preceding method embodiments, the JavaScript compilation is not required during the startup of a mobile widget, and the startup of the mobile widget application is accelerated, thereby improving the performance of the mobile widget application and enhancing the user experience.

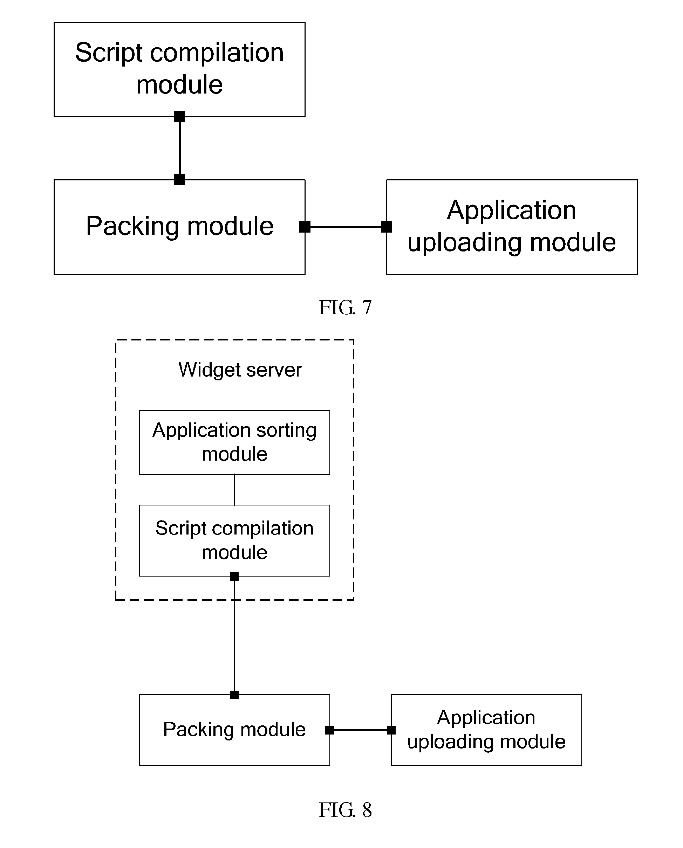

An embodiment of the present invention further provides an apparatus for improving performance of a mobile widget application. FIG. 7 is a schematic structural diagram of an apparatus according to an embodiment of the present invention. The apparatus includes:
a script compilation module, configured to: before a developed mobile widget application is uploaded to a download server, compile JavaScript files in the mobile widget application;
a packing module, configured to repack the compiled JavaScript files according to a format accessible by a JavaScript virtual machine on a terminal; and
an application uploading module, configured to upload the repacked mobile widget application to the download server for download by the terminal.

Further, FIG. 8 is another schematic structural diagram of an apparatus according to an embodiment of the present invention. In FIG. 8:

The script compilation module is arranged on a Widget server and further configured to compile the JavaScript files in the mobile widget application after the developed mobile widget application is uploaded to the Widget server.

The apparatus may further include:
an application sorting module, configured to sort the received mobile widget applications, by classifying the mobile widget applications into different types being able to run on different types of terminals. In this way, when downloading mobile widget applications, different types of terminals obtain only the mobile widget applications that can run on them.

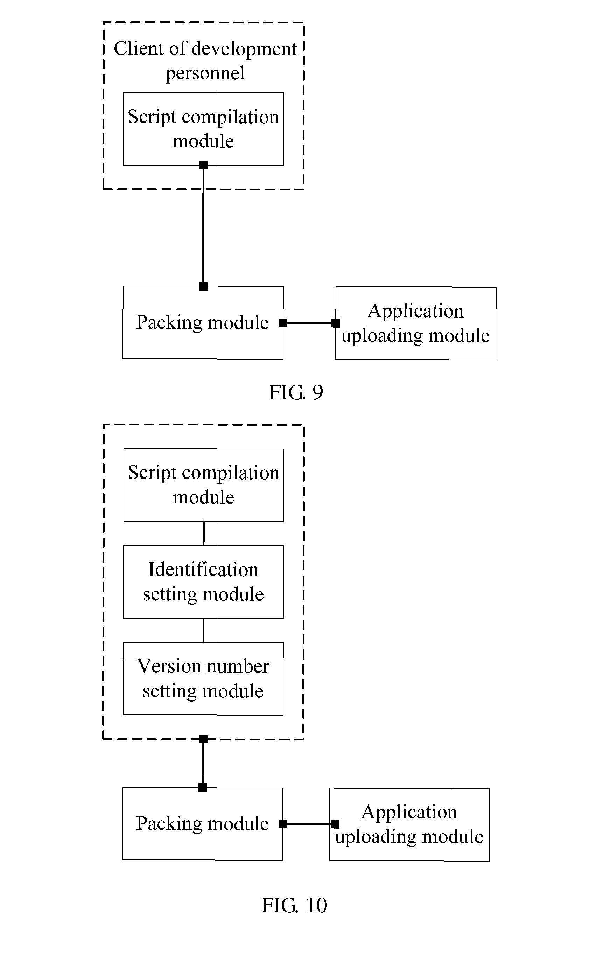

Further, FIG. 9 is another schematic structural diagram of an apparatus according to an embodiment of the present invention. In FIG. 9:

The script compilation module is arranged on a client of the development personnel and further configured to compile the JavaScript files in the mobile widget application before the developed mobile widget application is uploaded to the Widget server.

Further, FIG. 10 is another schematic structural diagram of an apparatus according to an embodiment of the present invention. In FIG. 10:

The apparatus further includes:
an identification setting module, configured to place an identification character at the beginning of the compiled and serialized binary files, so that a JavaScript engine on the terminal, when accessing JavaScript files in the downloaded mobile widget application, can determine whether the JavaScript files are JavaScript source files or compiled and serialized binary files.

In addition, the apparatus may further include:
a version number setting module, configured to place a version number of a compiler used for compiling the JavaScript source files behind the identification character, so that the JavaScript engine on the terminal can determine whether the serialized binary files are compatible with the JavaScript engine on the terminal based on the version number of the compiler.

The foregoing provides a method for executing a mobile widget application on a terminal from the angle of the system. Accordingly, the following describes the method from the angle of a terminal:

The terminal downloads JavaScript files from a download server, where the JavaScript files are compiled and serialized binary files; and
after determining that the JavaScript files are compiled and serialized binary files, the terminal executes the binary files.
Preferably, during a specific implementation, the determining, by the terminal, that the JavaScript files are compiled and serialized files specifically includes:
determining, by the terminal, that the downloaded JavaScript files are compiled and serialized binary files based on an identification character in the received JavaScript files.

Preferably, the method further includes:
determining, by the terminal, whether the serialized binary files are compatible with the JavaScript engine on the terminal based on the version number of the compiler in the received JavaScript files. Preferably, if the version is incompatible with the JavaScript engine on the terminal, the terminal may refuse to execute the JavaScript files.

Preferably, the method further includes:
compiling and executing, by the terminal, JavaScript source files after determining that the JavaScript files are the JavaScript source files.

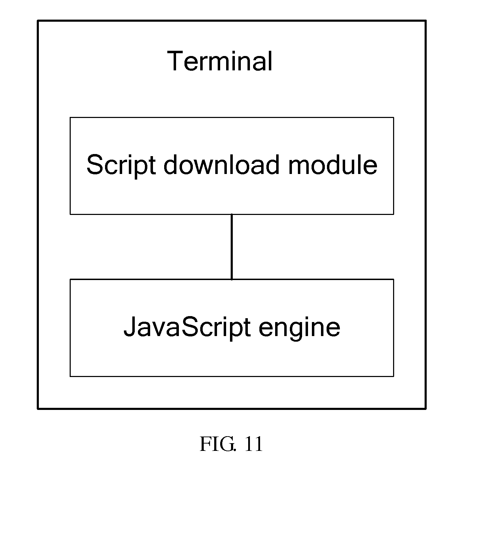

Accordingly, the foregoing already provides a terminal that is capable of executing a mobile widget application, where specially the terminal may be, but is not limited to, a mobile phone, a handheld mobile device, a PDA, a personal computer, and the like. FIG. 11 is a schematic structural diagram of a terminal according to an embodiment of the present invention. The terminal includes:
a script download module, configured to download JavaScript files from a download server, where the JavaScript files are compiled and serialized binary files; and
a JavaScript engine, configured to execute the binary files after determining that the JavaScript files are compiled and serialized binary files.

During specific implementation, the JavaScript engine determines that the downloaded JavaScript files are compiled and serialized binary files based on the identification character in the received JavaScript files.

Preferably, the JavaScript engine may be further configured to determine whether the serialized binary files are compatible with the JavaScript engine on the terminal based on a version number of a compiler in the received JavaScript files.

Preferably, the JavaScript engine may be further configured to compile and execute JavaScript source files after the terminal determines that the JavaScript files are the JavaScript source files.

It should be noted that in the preceding apparatus and terminal embodiments, the modules included are classified by functional logic, but are not limited to the preceding classification provided that the corresponding functions can be implemented; in addition, the specific names of various functional units are intended to distinguish between the functional units but not to limit the protection scope of the present invention.

In addition, persons of ordinary skill in the art should understand that all or a part of the steps of the methods in the embodiments may be implemented by a program instructing relevant hardware. The program may be stored in a computer readable storage medium, such as a read-only memory, a magnetic disk, and an optical disk.

To sum up, with the embodiments of the present invention, the JavaScript compilation is not required during the startup of a mobile widget, and the startup of the mobile widget application is accelerated, thereby improving the performance of the mobile widget application and enhancing the user experience.

The foregoing descriptions are merely preferred exemplary embodiments of the present invention, but not intended to limit the protection scope of the present invention. Any variation or replacement made by persons skilled in the art without departing from the technical scope of the embodiments of the present invention shall fall within the protection scope of the present invention. Therefore, the protection scope of the present invention shall be subject to the appended claims.

## Claims

1. A method for improving performance of a mobile widget application, comprising:
before uploading a developed mobile widget application to a download server, compiling JavaScript files in the mobile widget application; and
repacking the compiled JavaScript files according to a format accessible by a JavaScript virtual machine on a terminal, and uploading the repacked mobile widget application to the download server for download by the terminal.

2. The method according to claim 1, wherein the compiling JavaScript files in the mobile widget application specifically comprises:
uploading the developed mobile widget application to a Widget server, and compiling, by the Widget server, the JavaScript files in the mobile widget application.

3. The method according to claim 2, before compiling, by the Widget server, the JavaScript files in the mobile widget application, further comprising:
sorting, by the Widget server, the received mobile widget applications, wherein the mobile widget applications are classified into different types being able to run on different types of terminals, and so that when downloading mobile widget applications, different types of terminals can obtain only the mobile widget applications that can run on them.

4. The method according to claim 1, wherein the compiling JavaScript files in the mobile widget application specifically comprises:
before uploading the developed mobile widget application to a Widget server, compiling, by a client of the development personnel, the JavaScript files in the mobile widget application.

5. The method according to any one of claims 1-4, wherein the compiling JavaScript files in the mobile widget application specifically comprises:
extracting JavaScript source files in the mobile widget application, and compiling them one by one; and
saving the compilation results as binary files with their original names, and replacing the original JavaScript source files with the compiled and serialized binary files.

6. The method according to claim 5, further comprising:
placing an identification character at the beginning of the compiled and serialized binary files, so that a JavaScript engine on the terminal can determine whether the JavaScript files are JavaScript source files or compiled and serialized binary files based on the identification character.

7. The method according to claim 6, further comprising:
placing a version number of a compiler used for compiling the JavaScript files behind the identification character, so that the JavaScript engine on the terminal can determine whether the serialized binary files are compatible with the JavaScript engine on the terminal based on the version number of the compiler.

8. An apparatus for improving performance of a mobile widget application, comprising:
a script compilation module, configured to: before a developed mobile widget application is uploaded to a download server, compile JavaScript files in the mobile widget application;
a packing module, configured to repack the compiled JavaScript files according to a format accessible by a JavaScript virtual machine on a terminal; and
an application uploading module, configured to upload the repacked mobile widget application to the download server for download by the terminal.

9. The apparatus according to claim 8, wherein the script compilation module is arranged on a Widget server and further configured to compile the JavaScript files in the mobile widget application after the developed mobile widget application is uploaded to the Widget server.

10. The apparatus according to claim 9, further comprising:
an application sorting module, configured to sort the received mobile widget applications, wherein the mobile widget applications are classified into different types being able to run on different types of terminals, and so that when downloading mobile widget applications, different types of terminals can obtain only the mobile widget applications that can run on them.

11. The apparatus according to claim 8, wherein the script compilation module is arranged on a client of the development personnel and further configured to compile the JavaScript files in the mobile widget application after the developed mobile widget application is uploaded to the Widget server.

12. The apparatus according to claim 8, further comprising:
an identification setting module, configured to place an identification character at the beginning of the compiled and serialized binary files, so that a JavaScript engine on the terminal, when downloading JavaScript files in the mobile widget application, can determine whether the JavaScript files are JavaScript source files or compiled and serialized binary files.

13. The apparatus according to claim 12, further comprising:
a version number setting module, configured to place a version number of a compiler used for compiling the JavaScript source files behind the identification character, so that the JavaScript engine on the terminal can determine whether the serialized binary files are compatible with the JavaScript engine on the terminal based on the version number of the compiler.

14. A method for executing a mobile widget application on a terminal, wherein:
a terminal downloads JavaScript files from a download server, and the JavaScript files are compiled and serialized binary files; and
after determining that the JavaScript files are compiled and serialized binary files, the terminal executes the binary files.

15. The method according to claim 14, wherein the determining, by the terminal, that the JavaScript files are compiled and serialized binary files specifically comprises:
determining, by the terminal, that the downloaded JavaScript files are compiled and serialized binary files based on an identification character in the received JavaScript files.

16. The method according to claim 15, further comprising:
determining, by the terminal, whether the serialized binary files are compatible with the JavaScript engine on the terminal based on a version number of the compiler in the received JavaScript files.

17. The method according to claim 14, further comprising:
compiling and executing the JavaScript source files after the terminal determines that the JavaScript files are JavaScript source files.

18. A terminal for executing a mobile widget application, comprising:
a script download module, configured to download JavaScript files from a download server, wherein the JavaScript files are compiled and serialized binary files; and
a JavaScript engine, configured to execute the binary files after determining that the JavaScript files are compiled and serialized binary files.

19. The terminal according to claim 18, wherein:
the JavaScript engine determines that the downloaded JavaScript files are compiled and serialized binary files based on an identification character in the received JavaScript files.

20. The terminal according to claim 19, wherein:
the JavaScript engine is further configured to determine whether the serialized binary files are compatible with the JavaScript engine on the terminal based on a version number of a compiler in the received JavaScript files; and in case of incompatibility, the terminal refuses to execute the JavaScript files.

21. The terminal according to claim 18, wherein:
the JavaScript engine is further configured to compile and execute the JavaScript source files when the terminal determines that the JavaScript files are JavaScript source files.
